# EUROPÄISCHE PATENTSCHRIFT

(11) **EP 1 634 749 B1**
(45) Veröffentlichungstag und Bekanntmachung des Hinweises auf die Patenterteilung: **24.08.2011**
(21) Anmeldenummer: 05019505.6
(22) Anmeldetag: 08.09.2005
(51) Int. Cl.: B60J 7/12

(54) **Cabriolet-Fahrzeug**
Convertible car
Véhicule convertible

(30) Priorität: 09.09.2004 DE 102004044020
(43) Veröffentlichungstag der Anmeldung: 15.03.2006
(73) Patentinhaber: Wilhelm Karmann GmbH, 49084 Osnabrück (DE)
(72) Erfinder: Rußke, Klaus, 49143 Bissendorf (DE); Wegert, Friedrich, 49086 Osnabrück (DE)
(74) Vertreter: Kronthaler, Schmidt & Coll.

(56) Entgegenhaltungen:
- DE-C- 383 424
- GB-A- 466 633
- US-A- 1 333 844
- US-A- 4 695 089

## Beschreibung

Die Erfindung bezieht sich auf ein Cabriolet-Fahrzeug in einer Ausgestaltung nach dem Oberbegriff des Patentanspruches 1.

Cabriolet-Fahrzeuge herkömmlicher Bauart sind in vielfältiger Ausgestaltung bekannt und haben Antriebselemente zur Bewegung des Daches aus der Schließstellung in seine Ablagestellung, die motorisch das Dach in die Ablagestellung bzw. in die Schließstellung bewegen. Dazu werden Hydraulikzylinder und Antriebsmotoren verwendet, die nach mechanischer Entriegelung des Daches in seine Schließstellung den Öffnungsbewegungsvorgang durch eine entsprechende Aktivierung durch die Bedienperson einleiten und durchführen. Umgekehrt erfolgt dieses nach Öffnen eines Verdeckkastendeckels, indem das Dach in seine Ablagestellung abgelegt ist.

Darüber hinaus sind Cabriolet-Fahrzeuge bekannt, bei denen die Öffnung des Daches und auch das Schließen des Daches mechanisch von der Bedienperson durchzuführen ist. Dazu ist zunächst das Dach zu entriegeln. Die Bedienperson steigt danach üblicherweise aus dem Fahrzeug aus und überführt das Dach manuell neben dem Cabriolet-Fahrzeug stehend in seine Ablagestellung bzw. aus der Ablagestellung kommend in seine Schließstellung. Dies ist mit einem Bedienaufwand verbunden und insbesondere dann unangenehm, wenn bei plötzlich einsetzendem Regen ein geöffnetes Dach zu schließen ist. Die Lösungen mit elektrohydraulischen Antriebselementen erfordern einen nicht unerheblichen Bauaufwand und erhöhen die Gestehungskosten eines derartigen Cabriolet-Fahrzeuges mit motorisch angetriebener Schließ- und Öffnungsbewegung des Daches.

Aus der DE 383 424 ist ein Cabriolet-Fahrzeug der eingangs genannten Art bekannt, bei der mittels der im Fahrgastraum angeordneten Hubvorrichtung mit dem durch Muskelkraft beaufschlagbaren Hubstellmittel das Dach in seine Öffnungsstellung und aus dieser heraus in seine Schließstellung zu überführen ist. Einzelne Dachgestängeteile sind durch Hebel und Hebelarme mit einem Rad verbunden, das über einen Handhebel mit federnder Schaltklinke gedreht werden kann, wonach nach Übertragung der Bewegungskraft durch die Hebel und Hebelarme Dachgestängeteile verschwenkt werden können. Nachteilig ist, dass von der Bedienperson der Handhebel für eine Drehbewegung des Rades feinfühlig zu bedienen ist, um die entsprechende Aufschwenkbewegung durchführen zu können.

Es ist Aufgabe der vorliegenden Erfindung, das Cabriolet-Fahrzeug der eingangs genannten Art dahingehend weiterzubilden, dass mit baulich einfachen Mitteln das Dach kontrolliert aus dem Fahrgastinnenraum zu öffnen und zu schließen ist.

Zur Lösung dieser Aufgabe zeichnet sich das Cabriolet-Fahrzeug der eingangs genannten Art dadurch aus, dass an dem Verdeckgestell ein Kulissenstück festgelegt ist, in dessen Führungskulisse mit endseitigen Anschlägen das Übertragungsglied beweglich geführt ist.

Damit ist es möglich, den Restschließweg des Daches nach Beendigung des Schließbewegungszyklus in bewährter Art und Weise dadurch durchzuführen, dass die Bedienperson das Dach in die Endverriegelungsstellung überführt und dann mittels der Verriegelungsmittel an einem karosserieseitigen Querrahmen im Bereich der Windschutzscheibe verriegelt, ohne dass diese Endschließbewegung über Übertragungshebel, ein Zahnsegment oder dergleichen auf das Hubstellglied einwirkt, da im Bereich der Verbindung mit den Verdeckgestängeteilen das Kulissenstück vorgesehen ist, welches eine Kulisse hat, die auf den Endschließweg des Verdeckgestells hin abgestimmt ist und in der ein mit einem Übertragungshebel verbundener Mitnehmer über z.B. ein Bolzenelement abläuft bzw. in dieser geführt ist. Damit können Verdeckgestängeteile relativ zu z.B. dem Übertragungshebel, dem Zahnsegment und dem Betätigungshebel bzw. -bügel bewegt werden, so dass die Endschließbewegung des Daches durchzuführen ist. Umgekehrt gilt dies in der Ablagestellung genauso.

Damit ist ein Cabriolet-Fahrzeug zur Verfügung gestellt, bei dem mittels der Hubvorrichtung innerhalb des Fahrgastraumes über die Betätigung des Hubstellgliedes durch Muskelkraft, sei es durch Fuß- bzw. Beinmuskelkraft oder durch Hand- und Armmuskelkraft über das Hubstellglied das Dach zu öffnen oder zu schließen ist. Dazu wird das Hubstellmittel bewegt, beispielsweise auf- und abbewegt oder in eine Richtung bewegt mit einem Rückstellleerhubweg, wobei über geeignete Übertragungsmittel die ausgeübten Hubbewegungen in eine Öffnungs- und Schließbewegung des Verdeckgestells bzw. des Daches des Cabriolet-Fahrzeuges umgewandelt werden.

Alternativ ist es ebenfalls möglich, beispielsweise mittels des Hubstellgliedes einen Druckspeicher aufzupumpen bzw. einen in einem Speicher befindliches Hydraulikmedium zu pumpen, um durch die Pumpbewegungen ein Hydraulikstellglied derart zu beaufschlagen, dass Antriebsstellbewegungen dieses Hubzylindermittels ausgeübt werden, um die entsprechenden Öffnungs- und Schließbewegungen durchzuführen. Auch dazu stehen entsprechende Verbindungselemente für die Verdeckgestellteile in kostengünstiger Weise zur Verfügung.

In einer bevorzugten Ausführungsform ist das Hubstellmittel als z.B. U-förmiger Betätigungshebel ausgebildet, der beispielsweise mittig zwischen zwei Vordersitzen im Fahrgastraum gelegen ist, beispielsweise direkt hinter einem Getriebewahlhebel. Alternativ sind z.B. auch T-förmige, I-förmige, knopfförmige Gestaltungen denkbar. Dieser Betätigungshebel kann angehoben und wiederum abgesenkt werden und ist mithin schwenkbar. Er ist mit einem Übertragungselement, beispielsweise mit einem Zahnsegment über ein Klinkensegment derart zu verbinden, dass das schwenkbar abgestützte Zahnsegment in verschiedene Schwenkstellungen zu überführen ist. Dies kann so gestaltet sein, dass z.B. der Betätigungshebel über das Klinkensegment nur während der Anhebebewegung kraftschlüssig die Antriebsbewegung auf das Zahnsegment im Sinne einer Verschwenkung überträgt, während einer nachfolgenden Bewegung zurück in die in etwa horizontale Ausgangslage, durch das Klinkensegment vom Zahnsegment entkoppelt wird. Dies kann durch eine einfache Gestaltung der Zähne des Zahnsegmentes in Zusammenhang mit einer schwenkbaren Abstützung des Klinkensegmentes am Betätigungshebel erfolgen.

Das Zahnsegment kann über ein Übertragungsgestänge, beispielsweise einen Übertragungshebel, mit Gestängeteilen des Verdeckgestells verbunden sein, so dass durch die unterschiedlichen Schwenkstellungspositionen die Verdeckgestängeteile mechanisch in die entsprechenden Schließstellungs- bzw. Ablagepositionen überführt werden, so dass durch ein mehrmaliges Betätigen des Betätigungshebels eine komplette Schließbewegung des Daches bzw. eine komplette Ablagebewegung des Daches zu vollziehen ist, und zwar vom Inneren des Fahrzeuges aus. Die Bedienperson des Fahrzeuges kann mithin auch ohne das Erfordernis des Aussteigens die Öffnungs- und Schließbewegung durchführen, ohne dass es zusätzlicher weiterer motorischer Bauteile bedarf. Alternativ ist es ebenfalls möglich, beispielsweise die entsprechenden Hubbewegungen durch ein Fußpedal durchzuführen. Das kann beispielsweise ein Fußpedal sein mit einem Bowdenzug als Verbindungselement zu entsprechenden Verdeckgestängeteilen. Auch hier ist es wiederum möglich, durch mehrmaliges Betätigen z.B. eines Fußpedals mit anschließendem Leerhub die Komplettbewegung durchzuführen. Alternativ ist es jedoch auch möglich, den Pedalweg derart auf den gesamt benötigten Übertragungsweg eines festen Bowdenzuges so auszulegen, dass in einer Pedaltrittrichtung die vollständige Schließbewegung durchzuführen ist und in anderer Richtung die entsprechende Öffnungsbewegung.

Um in baulich einfacher Weise die entsprechenden Antriebsbewegungen auch auf beide seitlichen Lenker des Verdeckgestells gleichmäßig übertragen zu können, ist darüber hinaus in einer besonders bevorzugten Ausgestaltung vorgesehen, daß eine zwischen seitlichen Verdeckgestängeteilen, z.B. zwischen zwei Lenkern, eine zentrale Torsionsantriebseinheit in z.B. Gestalt einer Torsionswelle vorgesehen ist, die sich quer durch das Fahrzeug zu den jeweils wechselseitig seitlich vorgesehenen Verdeckgestängeteilen erstreckt und an denen auch zentral Übertragungsteile des Hubstellmittels, beispielsweise der Übertragungshebel mit seinem Mitnehmer, angreift, indem dort z.B. das Kulissenstück verdrehfest mit der Torsionswelle verbunden ist. Es ist ebenfalls möglich, z.B. das Hubstellmittel als einen im Bereich des Armaturenbrettes des Fahrzeuges angeordneten Handbedienhebel auszubilden.

Weitere vorteilhafte Ausgestaltungen der Erfindung ergeben sich aus weiteren Unteransprüchen, der Zeichnung und der nachfolgenden Beschreibung. In der Zeichnungen zeigen:
- Fig. 1: eine schematische perspektivische Teilansicht eines Ausführungsbeispiels eines Cabriolet-Fahrzeuges nach der Erfindung mit Darstellung von Teilen des Verdeckgestells und von einem Betätigungshebel in einer Ablagestellung des Daches,

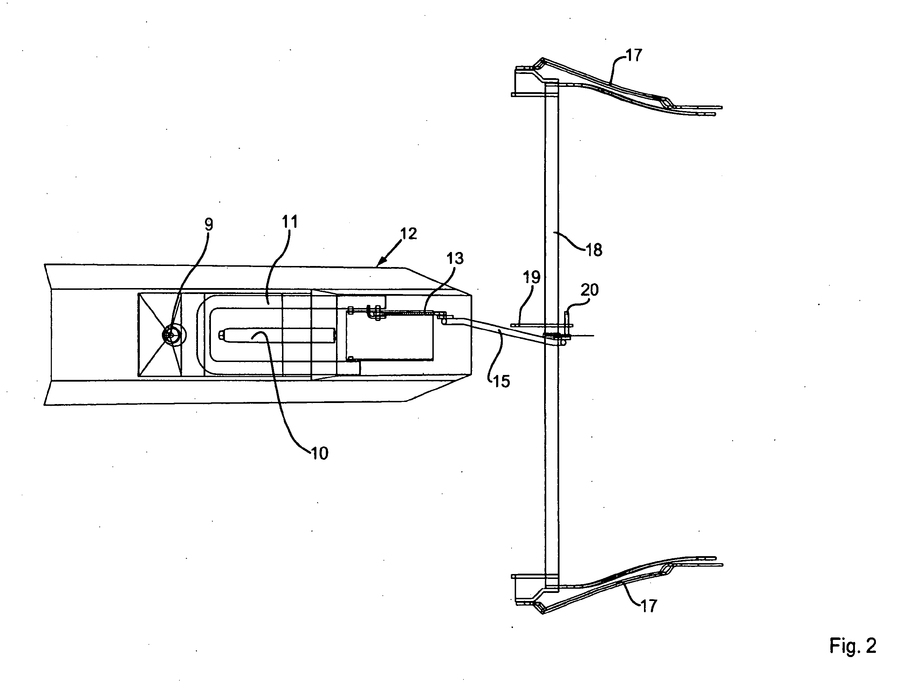

- Fig. 2: eine Draufsicht auf das Ausführungsbeispiel nach Fig. 1,
- Fig. 3: in einer schematischen Teilansicht dieser Ablagestellung eine Seitenansicht,
- Fig. 4: eine zu Fig. 3 analoge Darstellung in detaillierterer veranschaulichung der Teile,
- Fig. 5: eine zu Fig. 3 und Fig. 4 analoge Darstellung mit veranschaulichung der Dachteile,
- Fig. 6: eine zu Fig. 3 analoge Darstellung, in der der Betätigungshebel einmal angehoben ist zur Einleitung eines Schließvorganges,
- Fig. 7: die Darstellung nach Fig. 6 mit Veranschaulichung der Dachelemente,
- Fig. 8: eine zu den Fig. 3 und 6 analoge Darstellung in der Endphase des Schließzyklus mittels des Betätigungshebels, jedoch vor Durchführung des letzten Endschließvorganges durch Ziehen des Daches in die Verriegelungsposition,
- Fig. 9: die Schließposition gemäß der Darstellung nach Fig. 8 mit Veranschaulichung des Daches,
- Fig. 10: eine zu Fig. 8 analoge Darstellung in der Schließposition des Daches,
- Fig. 11: eine perspektivische Darstellung der Position des Daches, in der es vollständig geschlossen und verriegelt ist und
- Fig. 12: ein alternatives Ausführungsbeispiel mit einem Fußpedal als Hubstellglied.

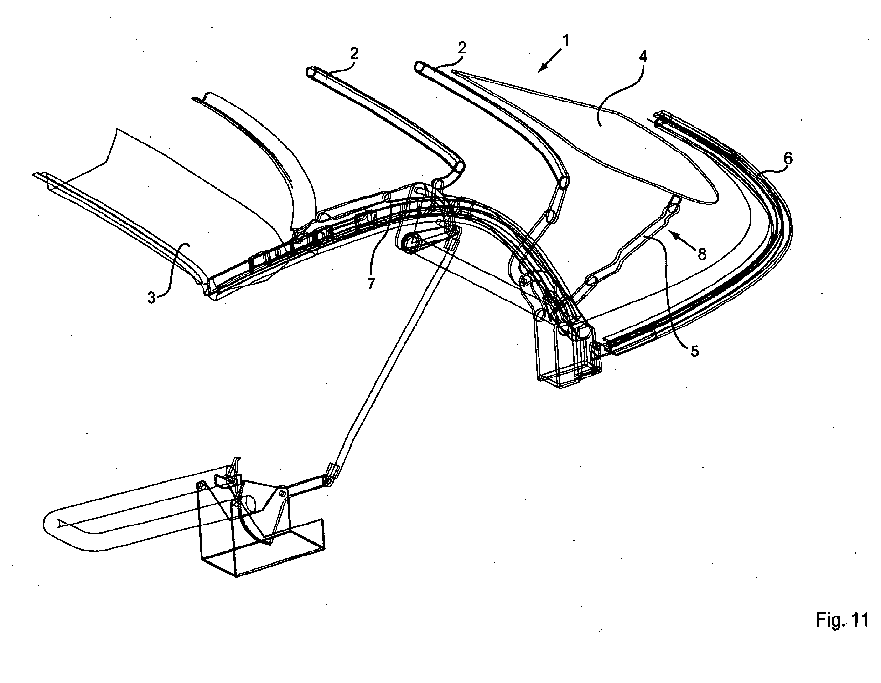

In der Zeichnung sind grundsätzlich gleichwirkende Teile mit übereinstimmenden Bezugsziffern versehen. In der Zeichnung ist auf die detaillierte Darstellung des Cabriolet-Fahrzeuges insgesamt aus Gründen der besseren Übersichtlichkeit verzichtet worden. Das Cabriolet-Fahrzeug hat ein allgemein mit 1 beziffertes Dach mit Querspriegeln 2, einem Querverbinder 3 zur Anbindung an ein Querrahmenprofil im Bereich der vorderen Windschutzscheibe, eine Heckscheibe 4, die über ein Verdeckgestängeteil 5 verschwenkbar gehalten ist, einen rückseitigen Verdeckhaltebügel 6 sowie Längslenker 7, die insgesamt das mit 8 bezifferte Verdeckgestell bilden, an dem ein z.B. als Softtop ausgebildetes Dach (im einzelnen nicht gezeigt) festzulegen ist. Dieser Aufbau des Verdeckgestells ist näher in Fig. 11 veranschaulicht, und zwar in der Schließposition des Daches, in der das Dach mit dem Querrahmenprofil der Karosserie im Bereich der Windschutzscheibe verriegelt ist.

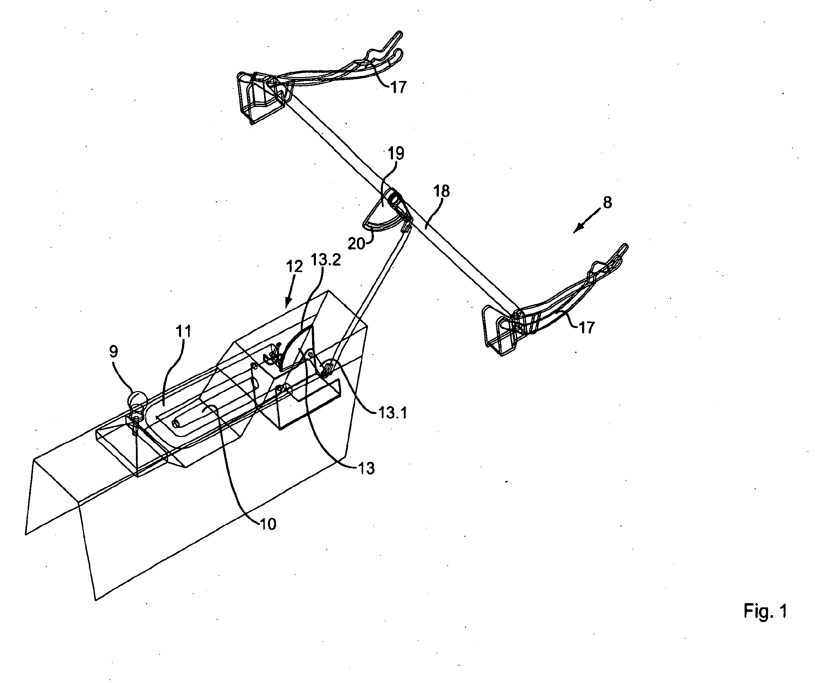

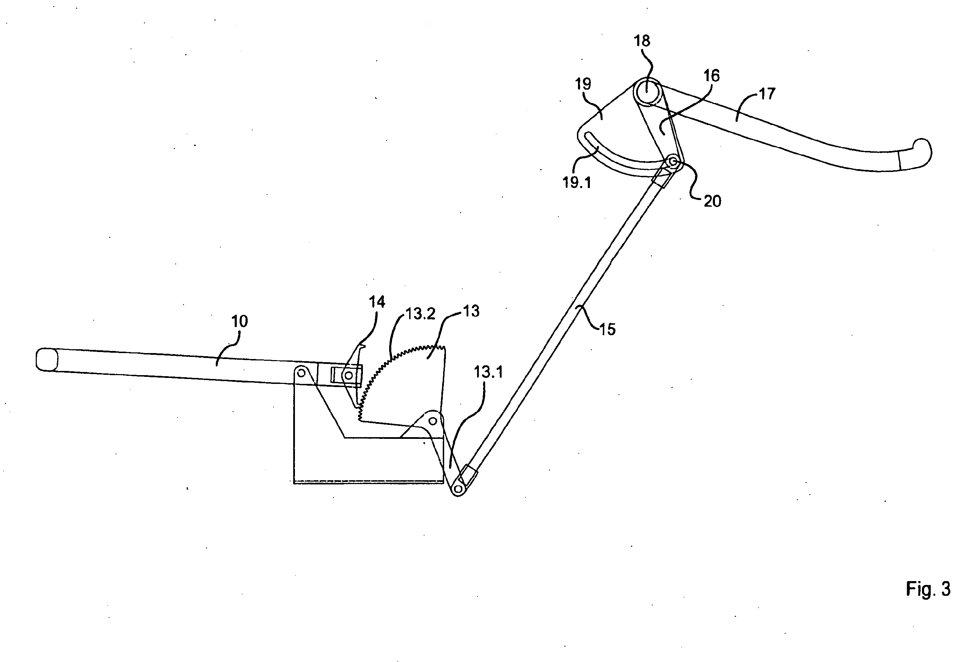

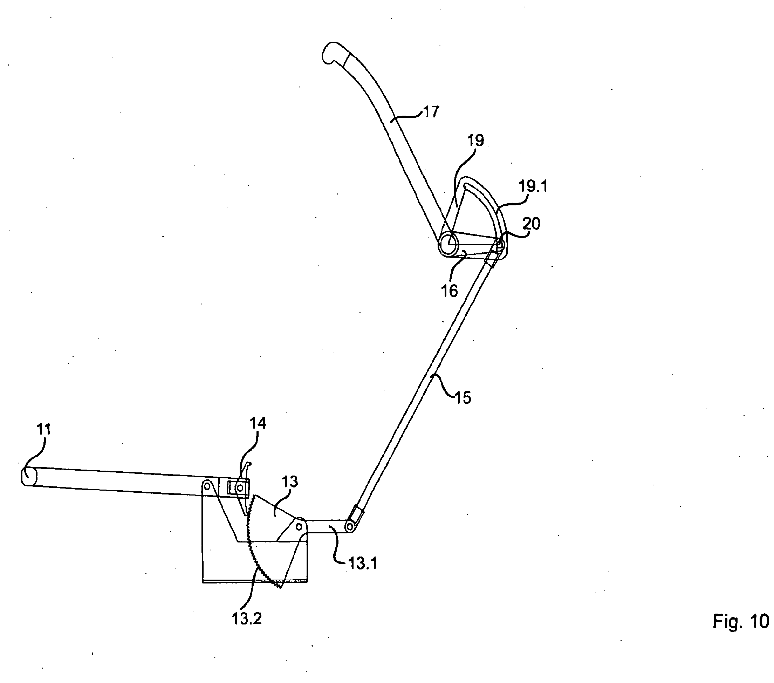

In Fig. 1 ist ein Ausführungsbeispiel der Erfindung mit Darstellung der zum Verständnis wesentlichen Bauteile das Dach bzw. das Verdeckgestell 8 in seiner Ablageposition, d.h. bei geöffnetem Dach veranschaulicht. Das Fahrzeug hat einen Ganghebel 9 sowie eine Handbremse 10. In seiner Ruheposition gezeigt ist ein Betätigungsbügel 11 als Hubstellmittel einer allgemein mit 12 bezifferten Hubvorrichtung. Diese Hubvorrichtung 12 umfaßt des weiteren noch ein Zahnsegment 13 und ein Klinkensegment 14 zwischen dem Betätigungsbügel 11 und dem Zahnsegment 13, das schwenkbar an dem Betätigungsbügel 11 gehaltert ist (Fig. 3). Das Zahnsegmentbügelstück 15, ist an seinem in der Zeichnung oberen Ende an einem Mitnehmer 16 angelenkt. Dieser Mitnehmer 16 ist bewegungsfest mit dem Längslenker 17 des Verdeckgestänges 8 verbunden. Wie näher aus Fig. 1 hervorgeht, sind die Lenker 17 zu beiden Seiten des Fahrzeuges durch eine Torsionswelle 18 verbunden, an der zentral ein Kulissenstück 19, das eine Kulisse 19.1 aufweist, bewegungsfest angreift. In dieser Kulisse 19.1 ist der Bolzen 20 zwischen Übertragungshebel 15 und dem Mitnehmer 16 geführt und kann zur Durchführung einer Restschließbewegung aus der in den Fig. 1, 3, 4, 6 und 8 ersichtlichen Position an einem Ende des Anschlages der Kulisse in die andere,Endposition überführt werden, wie diese aus den Fig. 10 und 11 hervorgeht. Dies geschieht durch Überführen des Daches insgesamt von Hand aus der letzten Schließzyklusstellung durch Hereinziehen des Daches in die Dachverriegelung.

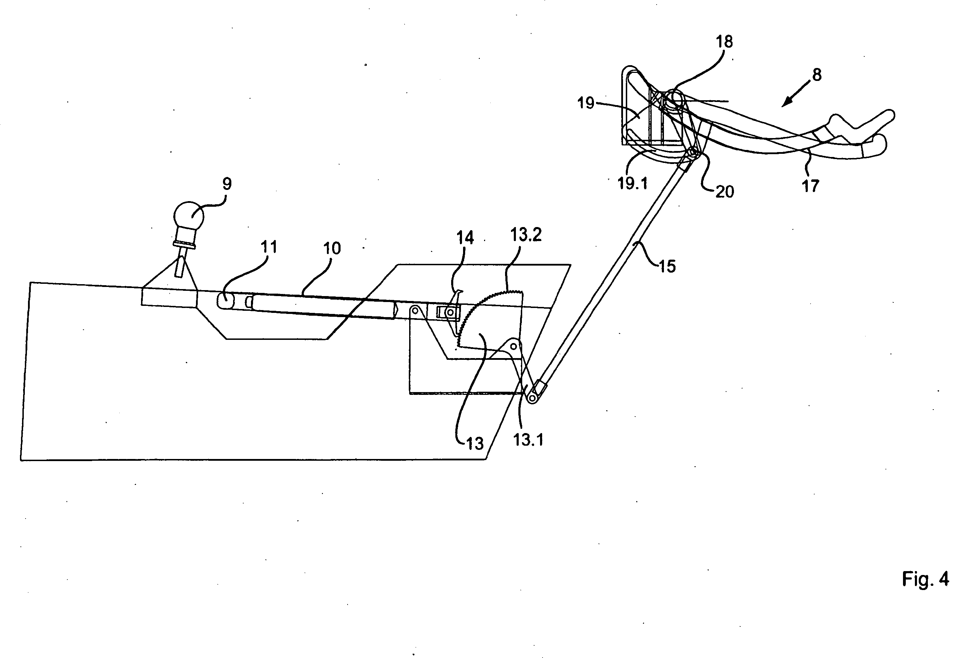

In der Ablagestellung gemäß der Darstellung nach Fig. 1 und 3 befindet sich der Betätigungsbügel 10 in seiner Ausgangsstellung. Das Zahnsegment 13 mit dem Zahnsegmentbügel 13.1 hat ebenfalls seine Ausgangsstellung eingenommen. Eine Klinke des Klinkensegments 14 greift in die Verzahnung 13.2 des zahnsegmentes ein. Der Bolzen 20 des Mitnehmers 16 bzw. des Übertragungshebels 15 liegt an dem in der Figur rechten Anschlag innerhalb der Kulisse 19.1 des Kulissenstückes 19 an. Diese Stellung der Teile ist auch aus Fig. 4 ersichtlich, wobei dort noch weitere Gestängeteile des Verdeckgestells 8 veranschaulicht sind.

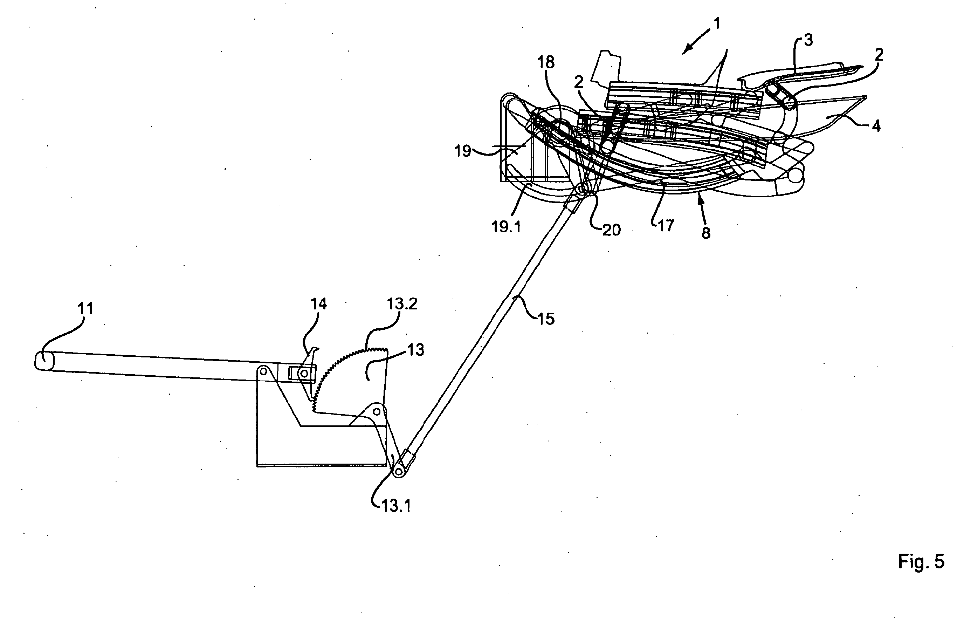

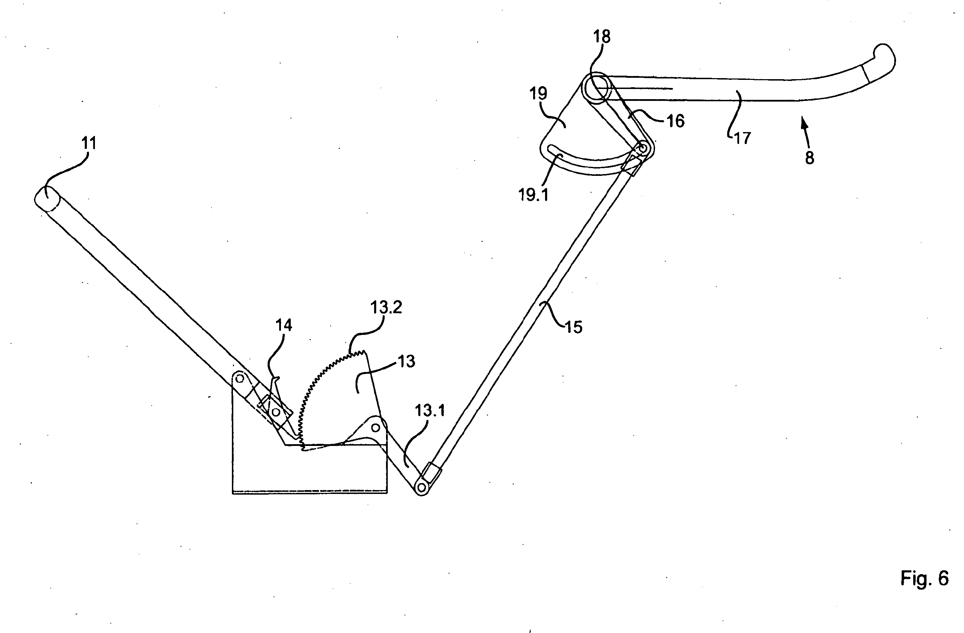

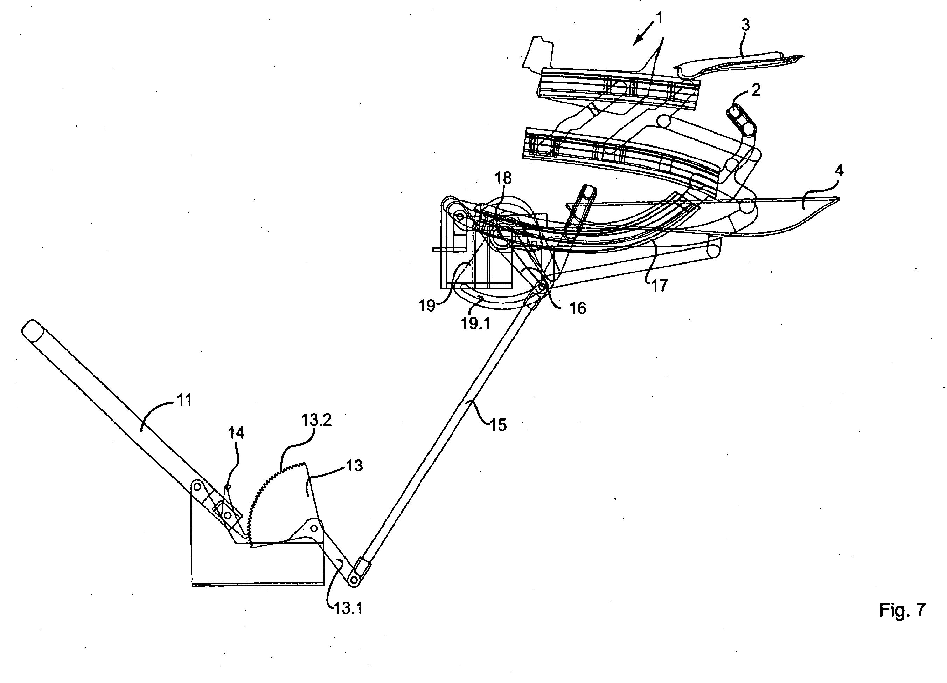

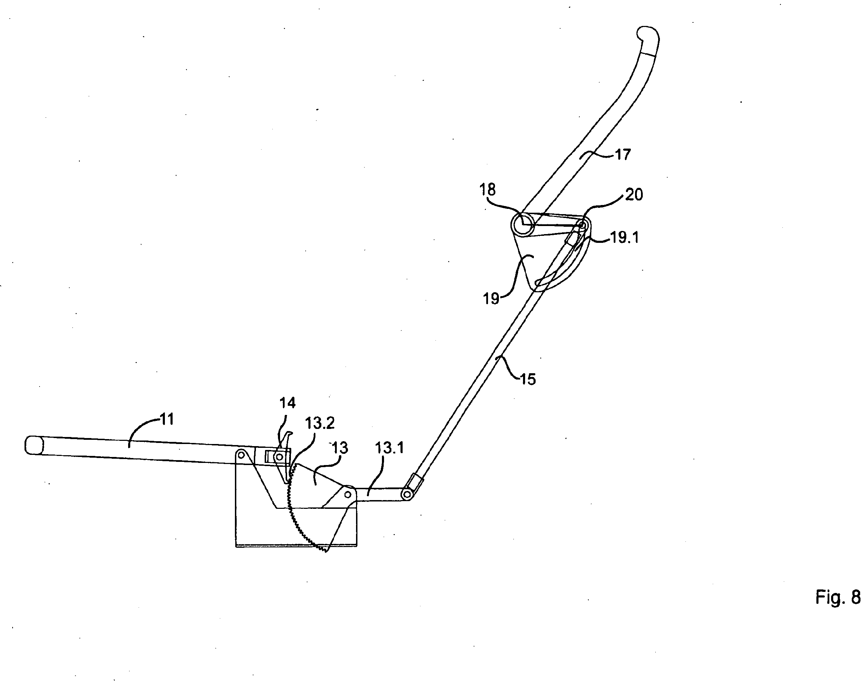

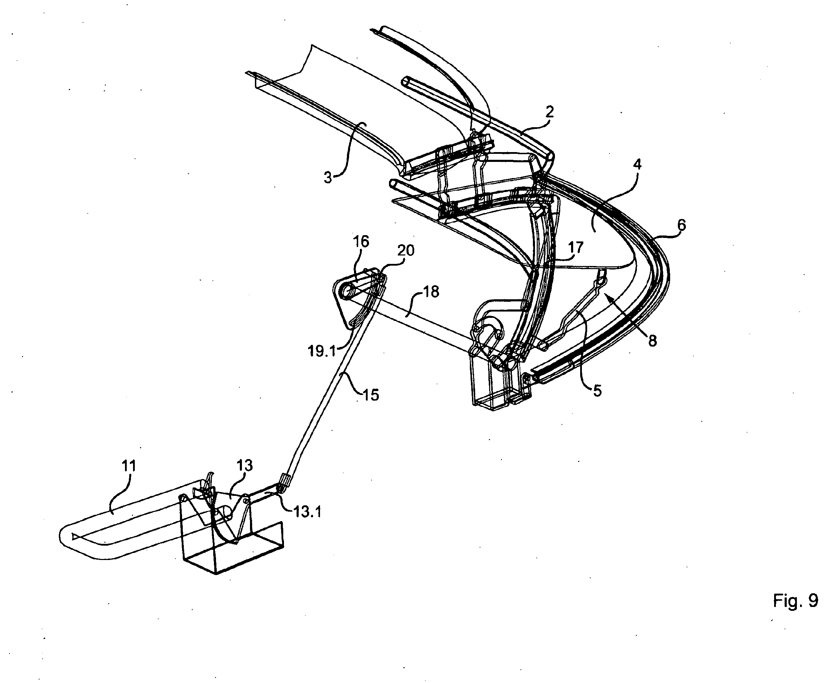

In den Fig. 6 und 7 ist eine Darstellung gezeigt, in der der Betätigungsbügel einmal nach oben gezogen ist, d.h. angehoben wurde. Das ist dabei aufgrund des Eingriffes in die Verzahnung in den aus den Fig. 3 bis 5 ersichtlichen Verzahnungsbereich das Klinkensegment um einen bestimmten Schwenkwinkel gegen den Uhrzeigersinn verschwenkt worden. Dadurch ist der Zahnsegmentbügel 13.1 ebenfalls gegen den Uhrzeigersinn verschwenkt worden, so daß der Übertragungshebel 15 das Kulissenstück 19 mitsamt der Torsionswelle 18 und mithin auch die Lenker 17 des Verdeckgestells 8 im Sinne einer Schließbewegung gegen den Uhrzeigersinn verschwenkt hat. In Fig. 7 ist gleiches mit zusätzlicher Darstellung der weiteren Teile des Daches 1 veranschaulicht. In den Fig. 8 und 9 ist eine Position des verdeckgestells 8 und der Teile der Hubvorrichtung 12 gezeigt, in der der Betätigungshebel bereits zwischenzeitlich zwei- oder dreimal betätigt wurde und sich nun in einer horizontalen Stellung befindet, in der das Verdeckgestell 8 bzw. das Dach, wie auch näher aus Fig. 9 mit Darstellung der entsprechenden Dachteile hervorgeht, schon in die Schließposition gelangt ist, wo nur noch ein Restschließweg durch Hineinziehen des Daches in die Verriegelungsposition im Bereich eines Querrahmens an der Windschutzscheibe von Hand zu vollziehen ist. Jetzt befindet sich der Zahnsegmentbügel 13.1 in einer etwa horizontalen Position und die Klinke des Klinkensegments 14 hat einen Zahnbereich 13.2 erreicht, der im gegenüber der Ausgangslage in einem oberen Bereich angesiedelt ist. Der Bolzen 20 befindet sich jedoch noch am oberen Endanschlag innerhalb der Kulissenführung 19.1.

In dieser Stellung der Teile (Antriebsbügel 11, Zahnsegment 13, Klinke 14, Übertragungshebel 15, Mitnehmer 20) sollen diese nicht mehr bewegt werden. Für die abschließende Endschließbewegung soll nur noch das Dach bzw. das Verdeckgestell 8 mit seinen Teilen relativ zu den Teilen der Hubvorrichtung 12 bewegt werden. Dies ist durch die Kulissenführung 19.1 ermöglicht, die von ihrer geometrischen Gestaltung (Kurvensegmentverlauf) und ihrer Längserstreckung auf diesen Restschließweg hin ausgelegt ist.

In Fig. 10 und 11 ist veranschaulicht, daß das Dach nun in seiner verriegelten Schließposition arretiert ist. Dabei ist das Kulissenstück 19 gegen den Uhrzeigersinn relativ zu den vorgenannten Teilen der Hubvorrichtung 12 verschwenkt worden, so daß sich der Bolzen 20 nunmehr am anderen Anschlagende der Kulissenführung 19.1 befindet.

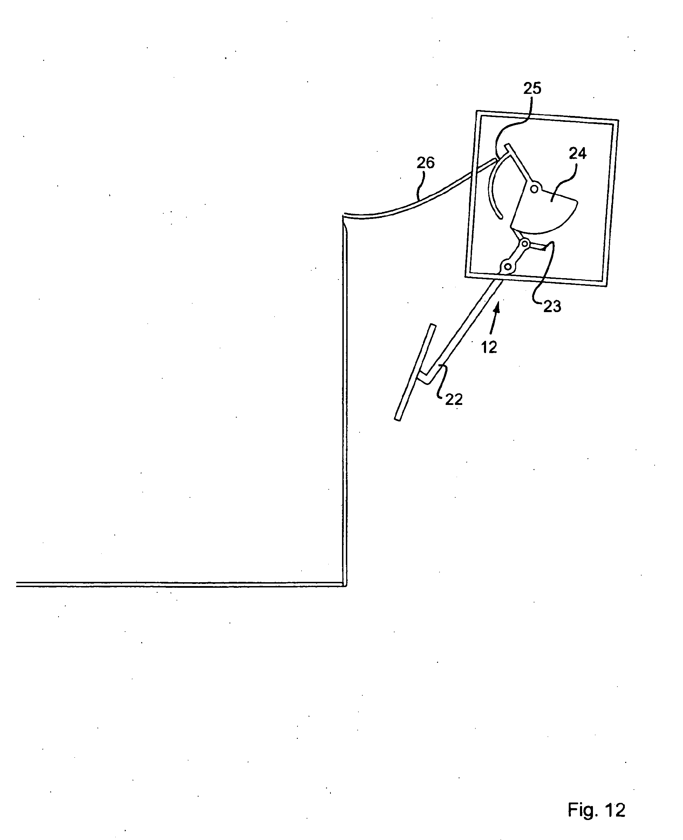

Bei ansonsten im wesentlichen analogen Aufbau ist in Fig. 12 ein alternatives Ausführungsbeispiel gezeigt, bei dem die Hubvorrichtung 12 ein Fußpedal 22 aufweist, das an seinem Ende wiederum ein Klinkensegment 23 und ein Zahnsegment 24 aufweist. Dieses Zahnsegment 24 ist mit einer Kulissenführung 25 versehen, die mit einem Bowdenzug 26 zusammenwirkt als relativ starrem, aber durchaus auch flexiblem Element, mit dem eine Verbindung zu dem Verdeckgestell 8 hergestellt werden kann und das die entsprechende Fußpedalbewegung auf das Verdeckgestell 8 überträgt.

Alternativ ist es ebenfalls möglich, sei es mit einem per Hand bedienbaren Betätigungshebel oder sei es mit einem fußbedienbaren Hebel, Hin- und Herbewegungen dazu zu nutzen, Medien zu pumpen, um über einen Druckspeicher mit entsprechenden Verbindungselementen die Stellbewegungen des Verdeckgestells bzw. des Daches zu vollziehen.

## Patentansprüche

1. Cabriolet-Fahrzeug mit einem in seiner Schließstellung einen Fahrgastraum überspannenden und aus der Schließstellung in eine in einem rückwärtigen Fahrzeugbereich gelegene Ablagestellung überführbaren Dach, das an einem Verdeckgestängeteile (17) sowie zumindest ein Antriebselement zur Bewegung des Daches aus seiner Schließstellung in die Ablagestellung und zurück umfassenden Verdeckgestell (8) festlegbar ist, wobei ein Antriebselement als eine im Fahrgastraum angeordnete Hubvorrichtung (12) mit einem durch Muskelkraft beaufschlagbaren Hubstellmittel (11) zur Bewegung des Daches aus seiner Schließstellung in die Ablagestellung und zurück ausgebildet ist, das Hubstellmittel (11) ein Klinkensegment (14) aufweist, das mit einem Zahnsegment (13) zusammenwirkt und über das Hubstellmittel das Zahnsegment (13) in verschiedene Bewegungsschwenkstellungen überführbar ist, in denen das Zahnsegment (13) über ein Übertragsglied Verdeckgestängeteile (17) in unterschiedliche Schließ- und/oder Öffnungsstellungen überführt, **dadurch gekennzeichnet, dass** an dem Verdeckgestell (8) ein Kulissenstück (19) festgelegt ist, in dessen Führungskulisse (19.1) mit endseitigen Anschlägen das Übertragungsglied (20) beweglich geführt ist.

2. Cabriolet-Fahrzeug nach Anspruch 1, **dadurch gekennzeichnet, dass** als Hubstellmittel (11) ein von Hand hin- und herbewegbarer Bedienungshebel vorgesehen ist, dessen zumindest eine Hubbewegung in eine Richtung als Antriebsbewegung zum Schließen und/oder Öffnen des Daches umwandelbar ist.

3. Cabriolet-Fahrzeug nach Anspruch 2, **dadurch gekennzeichnet, dass** der Betätigungshebel im Wesentlichen U-förmig, T-förmig, I-förmig und/oder knopfförmig gestaltet ist.

4. Cabriolet-Fahrzeug nach einem der Ansprüche 1 bis 3, **dadurch gekennzeichnet, dass** das Dach mittels der Hubvorrichtung (12) über Mehrfachhübe des Hubstellgliedes in seine Schließstellung und umgekehrt in seine Ablagestellung überführbar ist.

5. Cabriolet-Fahrzeug nach einem der Ansprüche 1 bis 4, **dadurch gekennzeichnet, dass** das Zahnsegment (13) über einen Übertragungshebel (15) mit dem Verdeckgestell (8) verbindbar ist.

6. Cabriolet-Fahrzeug nach einem der Ansprüche 1 bis 5, **dadurch gekennzeichnet, dass** das Hubstellmittel (11) nur während seines Anhebens auf das Dach eine Schließantriebs- bzw. Ablageantriebsstellung ausübt.

7. Cabriolet-Fahrzeug nach Anspruch 6, **dadurch gekennzeichnet, dass** das Hubantriebsmittel (11) während eines Leerhubes antriebsbewegungsmäßig von dem Dach entkoppelbar ist und während der Entkopplung das Dach an einer Rückstellbewegung gehemmt ist.

8. Cabriolet-Fahrzeug nach einem der Ansprüche 1 bis 7, **dadurch gekennzeichnet, dass** die Kulisse (19) in dem Kulissenstück von ihrer Längserstreckung her auf einen Restweg des Daches beim Schließvorgang ausgelegt ist.

9. Cabriolet-Fahrzeug nach einem der Ansprüche 1 bis 8, **dadurch gekennzeichnet, dass** seitliche Lenker (17) des Verdeckgestells (8) über eine das Cabriolet-Fahrzeug quer durchsetzende Antriebstorsionswelle (18) verbindbar sind, auf die zentral die Hubvorrichtung (12) hinsichtlich ihrer Antriebsbewegung einwirkt.

10. Cabriolet-Fahrzeug nach Anspruch 9, **dadurch gekennzeichnet, dass** an der Antriebstorsionswelle (18) drehbewegungsfest das Kulissenstück (19) befestigbar ist.

11. Cabriolet-Fahrzeug nach Anspruch 1, **dadurch gekennzeichnet, dass** das Hubstellmittel (6) als bewegliches Fußpedal (22) ausgebildet ist.

12. Cabriolet-Fahrzeug nach Anspruch 11, **dadurch gekennzeichnet, dass** das Fußpedal (22) über einen Bowdenzug (26) mit dem Verdeckgestell (8) verbindbar ist.

13. Cabriolet-Fahrzeug nach Anspruch 11 oder 12, **dadurch gekennzeichnet, dass** durch einen Hub des Fußpedals (22) das Dach aus seiner Ablagestellung in seine Schließstellung und umgekehrt überführbar ist.

14. Cabriolet-Fahrzeug nach einem der Ansprüche 1 bis 13, **dadurch gekennzeichnet, dass** das Hubstellmittel (1) als ein im Bereich eines Armaturenbrettes des Fahrzeuges angeordneter Handbedienhebel ausgebildet ist.

15. Cabriolet-Fahrzeug nach Anspruch 1, **dadurch gekennzeichnet, dass** das Hubstellmittel (11) über ein Druckmedium mit einem Druckspeicher verbunden und mittels des Hubstellmittels 811) ein Druck in dem Druckspeicher aufbaubar ist, wobei der Druckspeicher mit einem pneumatischen und/oder hydraulischen Stellglied zur Erteilung der Antriebsbewegung des Daches verbindbar ist.

## Claims

1. A convertible vehicle comprising a roof spanning a passenger compartment in its closed position and being movable from the closed position to a folded-down position located in a rear vehicle portion, said roof being fixable to a convertible top frame (8) comprising convertible top bar members (17) as well as at least one drive element for moving the roof from its closed position to the folded-down position and vice versa, wherein one drive element is provided as a lifting device (12) arranged in the passenger compartment and comprising a lifting actuator (11), which can be actuated by muscle power, for moving the roof from its closed position to the folded-down position and vice versa, said lifting actuator (11) comprising a catch segment (14) that cooperates with a tooth segment (13), which tooth segment (13) can be moved by the lifting actuator to different pivoting movement positions in which the tooth segment (13) moves convertible top bar members (17) to different closed and/or opened positions via a transmission member, **characterised in that** a guiding member (19) is fixed to the convertible top frame (8), the transmission member (20) being movably guided in the guiding rail (19.1) of the guiding member (19), which guiding rail (19.1) is provided with end-side limit stops.

2. The convertible vehicle according to claim 1, **characterised in that** an operating lever which can be moved back and forth manually is provided as the lifting actuator (11) whose at least one lifting movement in one direction is convertible to a drive movement for closing and/or opening the roof.

3. The convertible vehicle according to claim 2, **characterised in that** the operating lever is substantially U-shaped, T-shaped, I-shaped and/or button-shaped.

4. The convertible vehicle according to any one of claims 1 to 3, **characterised in that** the roof can be moved to its closed position and, vice versa, to its folded-down position by means of the lifting device (12) via multiple lifts of the lifting actuator.

5. The convertible vehicle according to any one of claims 1 to 4, **characterised in that** the tooth segment (13) can be connected to the convertible top frame (8) via a transmission lever (15).

6. The convertible vehicle according to any one of claims 1 to 5, **characterised in that** the lifting actuator (11) only exerts a closing and folding-down drive movement, respectively, on the roof while being lifted.

7. The convertible vehicle according to claim 6, **characterised in that**, during non-load lifting, the lifting actuator (11) can be drive-movement-wise uncoupled from the roof, and a reset movement of the roof is blocked during said uncoupling.

8. The convertible vehicle according to any one of claims 1 to 7, **characterised in that** the guiding rail (19) in the guiding member is designed for a remaining path of the roof during the closing operation with regard to its longitudinal extension.

9. The convertible vehicle according to any one of claims 1 to 8, **characterised in that** lateral guides (17) of the convertible top frame (8) can be connected via a torsional drive shaft (18) transversely crossing the convertible vehicle, on which torsional shaft the lifting device (12) acts centrally with regard to its drive movement.

10. The convertible vehicle according to claim 9, **characterised in that** the guiding member (19) can be rotationally fixedly attached to the torsional drive shaft (18).

11. The convertible vehicle according to claim 1, **characterised in that** the lifting actuator (11) is formed as a movable foot pedal (22).

12. The convertible vehicle according to claim 11, **characterised in that** the foot pedal (22) can be connected to the convertible top frame (8) via a Bowden cable (26).

13. The convertible vehicle according to claim 11 or 12, **characterised in that** the roof can be moved from its folded-down position to its closed position and vice versa via one actuation of the foot pedal (22).

14. The convertible vehicle according to any one of claims 1 to 13, **characterised in that** the lifting actuator (11) is provided as a hand-operating lever arranged in the area of a dashboard of the vehicle.

15. The convertible vehicle according to claim 1, **characterised in that** the lifting actuator (11) is connected to a pressure reservoir via a pressure medium, and that a pressure can be built up in the pressure reservoir via the lifting actuator (11), the pressure reservoir being connectable to a pneumatic and/or hydraulic actuator for imparting the drive movement of the roof.

## Revendications

1. Véhicule cabriolet avec un toit couvrant un habitacle dans sa position de fermeture et déplaçable de la position de fermeture dans une position de rangement située à l'arrière du véhicule, ce toit pouvant être fixé sur un châssis de capote (8) comprenant des pièces d'une tringlerie de capote (17) ainsi qu'au moins un élément d'entraînement pour le déplacement du toit à partir de sa position de fermeture dans la position de rangement et inversement, dans lequel on prévoit un élément d'entraînement sous la forme d'un dispositif de levage (12) disposé dans l'habitacle et comprenant un actionneur de levage (11), lequel peut être actionné par force musculaire, pour le déplacement du toit de sa position de fermeture dans la position de rangement et inversement, ledit actionneur de levage (11) présentant un segment à cliquet (14) qui coopère avec un segment denté (13) qui peut être amené dans différentes positions de pivotement par l'intermédiaire de l'actionneur de levage, dans lesquelles le segment denté (13), par l'intermédiaire d'un organe de transmission, déplace des pièces de la tringlerie de capote (17) dans différentes positions de fermeture et/ou d'ouverture, **caractérisé en ce qu'**une pièce à coulisse (19) est fixée sur le châssis de capote (8) et, dans sa coulisse de guidage (19.1), l'organe de transmission (20) est guidé à déplacement avec des butées de fin de course.

2. Véhicule cabriolet selon la revendication 1, **caractérisé en ce que** l'actionneur de levage (11) est prévu sous la forme d'un levier d'actionnement déplaçable d'avant en arrière à la main dont au moins un mouvement de levage peut être converti dans une direction comme mouvement d'entraînement pour la fermeture et/ou l'ouverture du toit.

3. Véhicule cabriolet selon la revendication 2, **caractérisé en ce que** le levier d'actionnement est conçu essentiellement en forme de U, en forme de T, en forme de I et/ou en forme de bouton.

4. Véhicule cabriolet selon l'une quelconque des revendications 1 à 3, **caractérisé en ce que** le toit peut être amené par l'intermédiaire du dispositif de levage (12), au moyen de courses multiples de l'actionneur de levage, dans sa position de fermeture et inversement dans sa position de rangement.

5. Véhicule cabriolet selon l'une quelconque des revendications 1 à 4, **caractérisé en ce que** le segment denté (13) peut être relié avec le châssis de capote (8) par l'intermédiaire d'un levier de transmission (15).

6. Véhicule cabriolet selon l'une quelconque des revendications 1 à 5, **caractérisé en ce que** l'actionneur de levage (11) n'exerce sur le toit un mouvement d'entraînement de fermeture ou d'entraînement de rangement que pendant son soulèvement.

7. Véhicule cabriolet selon la revendication 6, **caractérisé en ce que** l'actionneur de levage (11) peut être désaccouplé du toit, en ce qui concerne le mouvement d'entraînement, pendant une course à vide et, pendant le désaccouplement, le mouvement du toit dans une position de recul est bloqué.

8. Véhicule cabriolet selon l'une quelconque des revendications 1 à 7, **caractérisé en ce que** la coulisse (19) est conçue dans la pièce à coulisse dans le sens de la longueur sur une course résiduelle du toit lors du processus de fermeture.

9. Véhicule cabriolet selon l'une quelconque des revendications 1 à 8, **caractérisé en ce que** des bras oscillants latéraux (17) du châssis de capote (8) peuvent être fixés par l'intermédiaire d'un arbre de torsion (18) traversant transversalement le véhicule cabriolet, sur lequel arbre de torsion (18) le dispositif de levage (12) agit centralement par rapport à son mouvement d'entraînement.

10. Véhicule cabriolet selon la revendication 9, **caractérisé en ce que** l'arbre de torsion (18) peut être fixé sur la pièce à coulisse (19) pour bloquer le mouvement rotatif.

11. Véhicule cabriolet selon la revendication 1, **caractérisé en ce que** l'actionneur de levage (6) est conçue comme une pédale mobile au pied (22).

12. Véhicule cabriolet selon la revendication 11, **caractérisé en ce que** la pédale au pied (22) peut être reliée par l'intermédiaire d'un câble Bowden (26) avec le châssis de capote (8).

13. Véhicule cabriolet selon la revendication 11 ou 12, **caractérisé en ce que** le toit peut être amené de sa position de rangement dans sa position de fermeture et inversement par une course de la pédale au pied (22).

14. Véhicule cabriolet selon l'une quelconque des revendications 1 à 13, **caractérisé en ce que** l'actionneur de levage (11) est conçu comme un levier d'actionnement manuel disposé dans la région d'un tableau de bord du véhicule.

15. Véhicule cabriolet selon la revendication 1, **caractérisé en ce que** l'actionneur de levage (11) peut être relié par l'intermédiaire d'un milieu de pression avec un réservoir de pression et qu'une pression peut être établie à l'aide de l'actionneur de levage (11) dans le réservoir de pression, le réservoir de pression pouvant être relié avec un actionneur pneumatique et/ou hydraulique pour effectuer le mouvement d'entraînement du toit.
